# EUROPÄISCHE PATENTSCHRIFT

(11) **EP 0 585 834 B1**
(45) Veröffentlichungstag und Bekanntmachung des Hinweises auf die Patenterteilung: **12.02.1997**
(21) Anmeldenummer: 93113730.1
(22) Anmeldetag: 27.08.1993
(51) Int. Cl.: G11B 5/706

(54) **Magnetische Aufzeichnungsträger**
Magnetic recording medium
Milieu d'enregistrement magnétique

(30) Priorität: 02.09.1992 DE 4229246
(43) Veröffentlichungstag der Anmeldung: 09.03.1994
(73) Patentinhaber: BASF Magnetics GmbH, 67059 Ludwigshafen (DE)
(72) Erfinder: Jakusch, Helmut, Dr., D-67227 Frankenthal (DE); Schomann, Klaus Dieter, Dr., D-67063 Ludwigshafen (DE); Hitzfeld, Michael, Dr., D-67269 Gruenstadt (DE); Roller, Hermann, D-67071 Ludwigshafen (DE); Baur, Reinhold, Dr., D-77799 Ortenberg (DE); Rothfuss, Edwin, D-77749 Hohberg (DE)
(74) Vertreter: Mutzbauer, Helmut, Dr.

(56) Entgegenhaltungen:
- EP-A- 0 285 744
- DE-A- 3 914 565

## Beschreibung

Die Erfindung betrifft magnetische Aufzeichnungsträger, im wesentlichen bestehend aus einem unmagnetischen Trägermaterial und mindestens einer darauf aufgebrachten Magnetschicht, umfassend ein in einem polymeren Bindemittel auf der Basis von Polyurethanen und üblichen Zusatzstoffen gleichmäßig verteiltes, zu mindestens 40 Gew.% aus nadelförmigen ferromagnetischem Chromdioxid bestehendes magnetisches Material.

Derartige magnetische Aufzeichnungs träger sind z.B. in der DE-A-3 914 565 oder EP-A-285 744 beschrieben.

Die Verwendung von nadelförmigem ferromagnetischen Chromdioxid als magnetisches Material bei der Herstellung von magnetischen Aufzeichnungsträger ist bekannt. Solche, Chromdioxid enthaltenden Aufzeichnungsträgern zeigen gegenüber Aufzeichnungsträgern auf Basis anderer magnetischer Oxide überlegene magnetische Eigenschaften. Daneben ergeben sich aufgrund der herstellbedingten Feinteiligkeit und engen Teilchengrößenverteilung des nadelförmigen, weitgehend ohne Dendrite oder Cluster anfallenden Materials eine gute Dispergierbarkeit sowie eine hohe Packungsdichte in dem organischen Bindemittel bei einer danach leichten magnetischen Ausrichtbarkeit der nadelförmigen Teilchen. Diese gute Verarbeitbarkeit des Chromdioxids in einer Bindemittelmatrix erlaubt auch die Herstellung mechanisch widerstandsfähiger Magnetschichten mit einer besonders guten Oberflächenglätte, welche diese magnetischen Aufzeichnungsträger für die Aufzeichnung hoher Informationsschichten, insbesondere auf dem Gebiet der Bildspeicherung geeignet machen.

Der weit verbreitete Gebrauch von Heimvideogeräten hat die Nachfrage nach bespielten Cassetten, insbesondere Halbzoll-Videocassetten erheblich vergrößert. Um diesen Bedarf auf wirtschaftliche Weise zu befriedigen, ist es erforderlich, von einem Masterband in kurzer Zeit eine große Anzahl von Copybändern herzustellen. Die Herstellung derartiger Cassetten ist schwierig, da Videosignale eine große Anzahl von Informationen enthalten, die mit einem hohen Genauigkeitsgrad kopiert beziehungsweise dupliziert werden müssen, um eine angemessene Bildqualität zu erhalten.

Ein hierzu geeignetes Verfahren nutzt das Phänomen der anhysteretischen Remanenz. Bei einem solchen Schnellkopier-Prozeß, dem sogenannten Sprinterverfahren, wird ein Masterband bei hoher Geschwindigkeit in engen Kontakt mit dem Copyband gebracht, wobei während der kurzen Berührungszeit ein externes magnetisches Wechselfeld auf beide Bänder einwirkt. Dabei enthält das Masterband die zu übertragende Information spiegelbildlich und das in der Magnetschicht des Masterbands enthaltene, die Information speichernde magnetische Material muß eine gegenüber dem magnetischen Material des Copybandes etwa drei- bis vierfache Koerzitivfeldstärke aufweisen.

Bei einem solchen anhysteretischen Kontaktkopierverfahren werden an die magnetischen Aufzeichnungsträger, d.h. sowohl an das Master- als auch an das Copyband, hohe Anforderungen gestellt, welche über die beim üblichen Gebrauch dieser Medien hinausgehen.

Um eine große Anzahl von Kopien mit derartigen Schnellverfahren herzustellen, läuft das Masterband in einer Endlosschleife am Copyband im engen Kontakt unter hohem Druck vorbei, wie u.a. in der EP 0 288 319 beschrieben. Um einen besonders guten Kontakt zwischen Masterband und Copyband zu gewährleisten, wird in der japanischen Anmeldung 158 623/89 vorgeschlagen, Copyband und Masterband mit Preßluft aneinanderzupressen und gleichzeitig die zwischen Master- und Copyband eingeschlossene Luft durch Absaugen zu entfernen. Dennoch treten beim Kopieren nach dem Sprinter-Verfahren insbesondere bei Magnetbändern mit einer homogenen und für die Speicherung hoher Informationsdichten besonders ausgebildeten Magnetschicht bzw. Magnetschichtoberfläche typische großflächige Dropouts auf in Form hufeisen- bis ringförmiger Bereiche von einigen mm², auf denen die Aufzeichnung nicht oder nur sehr schwach kopiert ist. Untersuchungen zu den Gleiteigenschaften sowohl des Master- als auch des Copybandes zeigen, daß die Gleitreibung zwar einen Einfluß auf die Qualität der kopierten Information hat, jedoch die beschriebenen Schwierigkeiten, welche eine Folge einer Abstandsdämpfung sein können, nicht beseitigt.

Es bestand daher die Aufgabe, einen vorwiegend Chromdioxid als magnetisches Material enthaltenden magnetischen Aufzeichnungsträger bereitzustellen, der beim Kopieren mittels des sogenannten Sprinterverfahrens den genannten Nachteil großflächig auftretender Dropouts nicht aufweist.

Es wurde nun gefunden, daß sich mit einem magnetischen Aufzeichnungsträger, im wesentlichen bestehend aus einem unmagnetischen Trägermaterial und mindestens einer darauf aufgebrachten Magnetschicht, umfassend ein in einem polymeren Bindemittel auf der Basis von Polyurethanen und üblichen Zusatzstoffen gleichmäßig verteiltes, zu mindestens 40 Gew.% aus nadelförmigen ferromagnetischem Chromdioxid bestehendes magnetisches Material die Aufgabe lösen läßt, wenn die Magnetschicht, bezogen auf das Volumen der Schicht, eine innere Oberfläche von 5 bis 30 m²/cm³ aufweist.

Weiterhin ist Gegenstand der Erfindung ein Verfahren zur Herstellung der erfindungsgemäßen magnetischen Aufzeichnungsträger durch Herstellen einer Dispersion von anisotropem, zu mindestens 40 Gew.% aus nadelförmigen ferromagnetischem Chromdioxid bestehendem magnetischen Material in der Lösung einer organischen Bindemittelmischung unter Verwendung von Dispergierhilfsmitteln und weiteren üblichen Zusatzstoffen, schichtförmiges Auftragen der Dispersion auf ein nichtmagnetisches Trägermaterial und Verfestigen der aufgebrachten Magnetschicht, wobei der Anteil an magnetischem Material und gegebenenfalls festen Zusatzstoffen so gewählt wird, daß der Anteil am Schichtvolumen 45 bis 65 % beträgt.

Die die erfindungsgemäßen magnetischen Aufzeichnungsträger kennzeichnende innere, auf das Schichtvolumen bezogene Oberfläche wird ausgehend von der BET-Methode nach dem Einpunkt-Differenzverfahren nach Haul und Dümbgen bestimmt. Dabei wird nicht die gesamte Gasadsorptionsisotherme aufgenommen, sondern nur noch bei einem Relativdruck das adsorbierte Gasvolumen gemessen. Dieser Relativdruck liegt aufgrund der zur Messung erforderlichen Äbkühlung bei etwa p/pₒ ∼ 0,25.

Bei diesem Druck findet in dem für magnetische Datenspeicher relevanten Porengrößenbereich noch keine Kapillarkondensation statt. Bei porösen Proben ist nun die gemessene Oberfläche größer als die geometrische. Aus der Differenz der gemessenen zur geometrischen Oberfläche ergibt sich die innere Oberfläche der Magnetschicht, die, bezogen auf das Schichtvolumen, erfindungsgemäß 5 bis 30 und insbesondere 7 bis 25 m²/cm³ beträgt.

In einer besonders zweckmäßigen Ausgestaltung sind die erfindungsgemäßen magnetischen Aufzeichnungsträger so ausgebildet, daß ihre Magnetschicht eine plastische Deformierbarkeit, gemessen mit dem Härtemeßgerät Fischerscope der Firma Fischer, Sindelfingen, von größer 0,4 µm, insbesondere größer 0,45 µm bei einer Meßkraft von 5 mN, aufweist. Bei dem genannten Gerät wird ein Diamantkegel mit einer vorgegebenen Kraft in den Prüfling gedrückt und die Eindringtiefe gemessen; dabei wird die Schicht nur um einen so kleinen Beitrag deformiert, daß der Einfluß der Trägerfolie nahezu vernachlässigbar ist.

Das für die erfindungsgemäßen magnetischen Aufzeichnungsträger geeigneten ferro-magnetische Chromdioxid ist bekannt. Es entsteht bei der Umsetzung von Oxiden des 3- und 6-wertigen Chroms bei 200 bis 600°C im Hochdruckreaktor bei 100 bis 700 bar in Gegenwart von Wasser unter Zusatz von mindestens einer Eisenverbindung, üblicherweise Eisenoxide, und gegebenenfalls weiteren Modifizierungsmitteln auf der Basis von Antimon, Selen und/oder Tellur. Solche Verfahren zur Herstellung von Chromdioxid sind u.a. in der EP-B 27 640 sowie EP-A 198 110 offenbart.

Neben der Verwendung von Chromdioxid als alleinigem magnetischen Material ist auch eine Zumischung von bis zu 60 Gew.% an nadelförmigen magnetischen Eisenoxiden, insbesondere in einer durch Kobalt modifizierten Form bekannt. In gleicher Weise kann es zweckmäßig sein, der Magnetschicht weitere Feststoffe, d.h. nichtmagnetische anorganische Pigmente, wie z.B. ZnO-, SiO₂-, Al₂O₃-, Fe₂O₃- und/oder FeOOH-Pulver, zuzusetzen.

Die die magnetisierbare Schicht bildenden Bindemittel bestehen zu mindestens 50 Gew.% aus Polyurethanen. Hierfür kommen beispielsweise lösungsmittelhaltige Polyurethanelastomere in Frage, wie sie z.B. in der DE-B 11 06 959 oder in der DE-B 27 53 694 beschrieben sind. Weitere geeignete Polyurethane sind in den DE-A 32 26 995, 32 27 163 und 32 27 164 offenbart. Die Polyurethane können dabei als alleinige Bindemittel oder vorzugsweise in Abmischungen mit andern Polymeren (wie z.B. Polyvinylformale, Phenoxyharze, VC-Copolymerisate) verwendet werden. Von der zweiten Bindemittelkomponente werden vorzugsweise 10 bis 40 % zugesetzt. Bei diesen Bindemitteln ist es von besonderem Vorteil, daß ganz oder teilweise auf zusätzliche Dispergiermittel verzichtet werden kann.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10.000, vorzugsweise zwischen 500 und 3.000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die eingesetzte Menge an Polyisocyanat ist dabei dem jeweiligen Bindemittelsystem anzupassen.

Als Lösungsmittel werden je nach eingesetztem Bindemittel Wasser, cyclischer Ether, wie Tetrahydrofuran und Dioxan, und cyclische Ketone, wie Cyclohexanon, verwendet. Die Polyurethane sind auch in anderen stark polaren Lösungsmitteln, wie Dimethylformamid, N-Methylpyrrolidon, Dimethylsulfoxid oder Ethylglykolacetat löslich. Ebenso ist es möglich, die genannten Lösungsmittel mit Aromaten, wie Toluol oder Xylol und Estern, wie Ethyl- oder Butylacetat, zu mischen.

Den Dispersionen aus magnetischem Material und Bindemittel werden im allgemeinen weitere Zusatzstoffe zur Verbesserung der Magnetschicht zugesetzt. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem sowie Wachse, Lecithine, Siliconöle, Fluorcarbone, außerdem Füllstoffe, wie Ruß, Graphit, Quarzmehl und/oder nicht magnetisierbares Pulver auf Silicatbasis. Üblicherweise liegen solche Zusätze insgesamt unter 10 Gew.%, bezogen auf die Magnetschicht.

Ein für die Herstellung der erfindungsgemäßen magnetischen Aufzeichnungsträger wesentlicher Parameter ist der Volumenanteil des magnetischen Materials bzw. der Anteil der Summe aus magnetischem Material und den übrigen in der Magnetschicht enthaltenen Feststoffen, der einen Anteil am Schichtvolumen zwischen 45 bis 65, insbesondere zwischen 50 bis 58 Volumenprozente aufweisen muß.

Die Herstellung der magnetisierbaren Schichten erfolgt in bekannter Weise. Hierzu wird die Magnetdispersion mit Hilfe üblicher Beschichtungsmaschinen, z.B. mittels eines Linealgießers, auf den nichtmagnetischen Träger aufgetragen. Als nichtmagnetischen Träger lassen sich die üblichen Trägermaterialien verwenden, insbesondere Folien aus linearen Polyestern, wie Polyethylenterephthalat, im allgemeinen in Stärken von 4 bis 36 µm und insbesondere von 6 bis 15 µm. Bevor die noch flüssige Beschichtungsmischung auf dem Träger getrocknet wird, was zweckmäßigerweise bei Temperaturen von 50 bis 100°C während 2 bis 200 s geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 20 bis 100°C, vorzugsweise 40 bis 80°C, geglättet und verdichtet werden. Die Dicke der Magnetschicht beträgt im allgemeinen 1 bis 20 µm, vorzugsweise 2 bis 12 µm.

Die erfindungsgemäßen magnetischen Aufzeichnungsträger zeichnen sich sowohl durch ausgezeichnete mechanische Eigenschaften als auch aufgrund des Chromdioxid-Materials durch gute Aufzeichnungs- und Wiedergabequalität insbesondere bei der magnetischen Bildaufzeichnung aus. Hervorzuheben ist die hervorragende Eignung dieser Medien als Copyband bei der Vervielfältigung von Videoaufzeichnungen mittels des Sprinter-Verfahrens.

Die Erfindung sei anhand folgender Beispiele und Vergleichsversuche näher erläutert. Die in den Beispielen verwendeten Teile sind Gewichtsteile.

### Beispiel 1

In eine Kugelmühle mit einem Volumen von 30 000 Teilen wurden 40 000 Teile Stahlkugeln mit einem Durchmesser von 4-6 mm, 8050 Teile eines Lösungsmittelgemisches aus gleichen Teilen Tetrahydrofuran und Dioxan, 1080,34 Teile einer 50 %igen Lösung eines niedermolekularen Polyurethanharzes gemäß Beispiel A der EP-B 99 533, hergestellt in einem Gemisch aus gleichen Teilen Tetrahydrofuran und Dioxan, 553,87 Teile einer 20 %igen Lösung eines Polyvinylformalharzes mit einem K-Wert von ca. 50 in einem Gemisch aus gleichen Teilen Tetrahydrofuran und Dioxan, 102 Teile Zinkoleat, 30 Teile eines C₁₆-C₁₈-Fettsäuregemisches, 60 Teile einer 50 %igen Methylstearatlösung in einem Gemisch aus gleichen Teilen Tetrahydrofuran und Dioxan, 4800 Teile eines CrO₂-Pigmentes mit einer Koerzitivfeldstärke von 51 kA/m, sowie 1200 Teile eines Co-modifizierten Fe₂O₃-Pigmentes mit einer Koerzitivfeldstärke von 51 kA/m, eingefüllt.

Dann wurde die Mühle verschlossen und der Inhalt 120 Stunden dispergiert. Die Dispersion wurde nach dieser Zeit der Mühle entnommen und wie folgt weiterverarbeitet: Um die Schicht nach dem Auftrag zu vernetzen, wurden auf 1000 Teile der Dispersion 25,97 Teile einer 50 %igen Lösung eines Isocyanatharzes aus 1 Mol Trimethylolpropan und 3 Molen Toluylendiisocyanat in Tetrahydrofuran 15 Minuten lang zugerührt. Nach anschließender Filtration durch ein Papierfilter wurde die Dispersion mittels eines Linealgießers auf eine 15 µm Polyethylenterephthalatfolie aufgebracht und im Trockenkanal der Beschichtungsmaschine bei 90°C getrocknet. Die erzielte Magnetschichtdicke betrug 4,5 µm. Nach dem Trocknen wurde die Magnetschicht durch Hindurchführen zwischen beheizten Walzen unter Druck (80°C, Liniendruck 1500 N/cm) geglättet und die beschichtete Folienbahn in 1/2'' breite Bänder geschnitten. Der Anteil des Feststoffs, hier des magnetischen Materials am Schichtvolumen (Pigment-Volumen-Konzentration, PVK) betrug 59 %. Bei der Magnetschicht wurde die innere Oberfläche bestimmt, sowie die Sprintertauglichkeit auf dem Sony Gerät HSP 500 getestet. Hierbei wurde der visuelle Eindruck, d.h. Hüllkurvenhomogenität und Störungsfreiheit bewertet. Die Ergebnisse sind in der Tabelle aufgeführt.

### Beispiel 2

Im Beispiel 2 wurde wie im Beispiel 1 angegeben verfahren, jedoch wurde eine Magnetschicht mit einer PVK von 55 % hergestellt. Die Ergebnisse sind in der Tabelle aufgeführt.

### Beispiel 3

Im Beispiel 3 wurde wie im Beispiel 1 angegeben verfahren, jedoch wurde eine Magnetschicht mit einer PVK von 53 % hergestellt. Die Ergebnisse sind in der Tabelle aufgeführt.

### Beispiel 4

Im Beispiel 4 wurde wie im Beispiel 1 angegeben verfahren, jedoch wurde eine Magnetschicht mit einer PVK von 51 % hergestellt. Die Ergebnisse sind in der Tabelle aufgeführt.

### Beispiel 5

Im Beispiel 5 wurde wie im Beispiel 1 angegeben verfahren, jedoch wurde eine Magnetschicht mit einer PVK von 49 % hergestellt. Die Ergebnisse sind in der Tabelle aufgeführt.

### Beispiel 6

Im Beispiel 6 wurde ein Teil der magnetischen Pigmente durch einen Füllstoff auf Basis eines Quarz-Kaolinitgemisches ersetzt, statt der 4800 g des CrO₂-Pigmentes und der 1200 g des Co-modifizierten Fe₂O₃-Pigmentes, wurde folgende Füllstoff-Pigmentkombination in die 30 l Kugelmühle eingefüllt: 1021,42 g Füllstoff, 4320 g CrO₂ und 1080 g Fe₂O₃. Die übrigen Parameter blieben unverändert.

Die PVK in der Magnetschicht betrug 59 %. Die Ergebnisse sind in der Tabelle aufgeführt.

### Beispiel 7

Es wurde eine Magnetschicht mit einer PVK von 45,0 % gemäß dem im Beispiel 1 angegebenen Verfahren hergestellt, die Magnetschicht wurde jedoch nicht unmittelbar nach der Fertigung kalandriert, sondern erst 24 Stunden später. Die Ergebnisse sind in der Tabelle aufgeführt.

### Vergleichsversuch 1

Es wurde wie in Beispiel 1 verfahren, jedoch wurde eine Magnetschicht mit einer PVK von 44,6 % hergestellt. Die Ergebnisse sind in der Tabelle aufgeführt.

### Vergleichsversuch 2

Es wurde wie in Beispiel 1 verfahren, jedoch wurde eine Magnetschicht mit einer PVK von 41 % hergestellt. Die Ergebnisse sind in der Tabelle aufgeführt.

**Tabelle**

| Versuch | PVK (%) | innere Oberfläche (m²/cm³) | Hüllkurvenbild | Störungen |
|---|---|---|---|---|
| Beispiel 1 | 59 | 15 | ausgezeichnet | keine |
| Beispiel 2 | 55 | 13,5 | ausgezeichnet | keine |
| Beispiel 3 | 53 | 13 | ausgezeichnet | keine |
| Beispiel 4 | 51 | 11 | gut | keine |
| Beispiel 5 | 49 | 9,5 | befriedigendgut | sehr gering |
| Beispiel 6 | 59 | 13 | ausgezeichnet | gering, drop outs |
| Beispiel 7 | 45 | 7,1 | befriedigend | sehr gering |
| Vergleich 1 | 44,6 | 4,1 | "zerklüftet" | Kopie gestört |
| Vergleich 2 | 41 | 2,1 | stark "zerklüftet" | Kopie gestört |

## Patentansprüche

1. Magnetischer Aufzeichnungsträger, im wesentlichen bestehend aus einem unmagnetischen Trägermaterial und mindestens einer darauf aufgebrachten Magnetschicht, umfassend ein in einem polymeren Bindemittel auf der Basis von Polyurethanen und üblichen Zusatzstoffen gleichmäßig verteilten, zu mindestens 40 Gew.% aus nadelförmigen ferromagnetischem Chromdioxid bestehendem magnetischen Material, dadurch gekennzeichnet, daß die Magnetschicht, bezogen auf das Volumen der Schicht, eine innere Oberfläche von 5 bis 30 m²/cm³ aufweist.

2. Verfahren zur Herstellung der magnetischen Aufzeichnungsträger gemäß Anspruch 1 durch Herstellen einer Dispersion von anisotropem, zu mindestens 40 Gew.% aus nadelförmigen ferromagnetischem Chromdioxid bestehendem magnetischen Material in der Lösung einer organischen Bindemittelmischung unter Verwendung von Dispergierhilfsmitteln und weiteren üblichen Zusatzstoffen, schichtförmiges Auftragen der Dispersion auf ein nichtmagnetisches Trägermaterial und Verfestigen der aufgebrachten Magnetschicht, dadurch gekennzeichnet, daß der Anteil an magnetischem Material und gegebenenfalls festen Zusatzstoffen so gewählt wird, daß der Anteil am Schichtvolumen 45 bis 65 % beträgt.

## Claims

1. A magnetic recording medium consisting essentially of a nonmagnetic substrate and at least one magnetic layer applied thereon comprising a magnetic material which is uniformly dispersed in a polymeric binder based on polyurethanes and conventional additives and consists of at least 40% by weight of acicular ferromagnetic chromium dioxide, wherein the magnetic layer has an internal surface area of from 5 to 30 m²/cm³, based on the volume of the layer.

2. A process for the production of the magnetic recording medium as claimed in claim 1 by preparing a dispersion of anisotropic magnetic material, consisting of at least 40% by weight of acicular ferromagnetic chromium dioxide, in the solution of an organic binder mixture using dispersants and further conventional additives, applying the dispersion in the form of a layer to a nonmagnetic substrate and solidifying the applied magnetic layer, wherein the amount of magnetic material and, if required, solid additives is chosen so that it is from 45 to 65%, based on the layer volume.

## Revendications

1. Support magnétique d'enregistrement constitué essentiellement d'un substrat non magnétique et d'au moins une couche magnétique appliquée sur celui-ci, comprenant un matériau magnétique constitué à au moins 40 % en poids de dioxyde de chrome ferromagnétique aciculaire et réparti uniformément dans un liant polymère à base de polyuréthanes et d'additifs usuels, caractérisé par le fait que la couche magnétique présente relativement à son volume une surface intérieure de 5 à 30 m²/cm³.

2. Procédé de fabrication du support magnétique d'enregistrement de la revendication 1 par élaboration d'une dispersion de matériau magnétique anisotrope constitué à au moins 40 % en poids de dioxyde de chrome ferromagnétique aciculaire dans la solution d'un mélange liant organique avec utilisation d'adjuvants de dispersion et d'autres additifs usuels, application en couche de la dispersion sur un substrat non magnétique et durcissement de la couche magnétique appliquée, caractérisé par le fait que la proportion de matériau magnétique et éventuellement d'additifs solides est choisie de façon que celle-ci soit de 45 à 65 % du volume de la couche.
